(19) Europäisches Patentamt
European Patent Office
Office européen des brevets

(11) **EP 4 783 434 A1**

(12) **EUROPEAN PATENT APPLICATION**
published in accordance with Art. 153(4) EPC

(43) Date of publication:
29.07.2026 Bulletin 2026/31

(21) Application number: 24868704.8

(22) Date of filing: 20.09.2024

(51) International Patent Classification (IPC):
H02K 15/02 $^{(2025.01)}$   H02K 15/12 $^{(2025.01)}$
H01F 41/02 $^{(2006.01)}$   H01F 3/02 $^{(2006.01)}$

(52) Cooperative Patent Classification (CPC):
H01F 3/02; H01F 41/02; H02K 15/02; H02K 15/12

(86) International application number:
PCT/KR2024/014158

(87) International publication number:
WO 2025/063727 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.09.2023 KR 20230125519

(71) Applicant: POSCO Co., Ltd
Pohang-si, Gyeongsangbuk-do 37859 (KR)

(72) Inventor: SHIM, Ho-Kyung
Incheon 21985 (KR)

(74) Representative: Meissner Bolte Partnerschaft
mbB
Patentanwälte Rechtsanwälte
Postfach 86 06 24
81633 München (DE)

(54) **CORE OF MOTOR AND MANUFACTURING METHOD THEREOF**

(57) The present invention relates to a motor core and, more particularly, a core and a core manufacturing method, wherein the core has low iron loss and excellent flatness and perpendicularity. According to an embodiment of the present invention, a method for manufacturing a block laminated core comprises: a block core step of forming block cores having a first length by laminating and coupling electrical steel sheets in a first direction; a lamination step of rotating the multiple block cores by a first angle in a second direction, which is a circumferential direction, and laminating the block cores to achieve a second length in the first direction; and a welding step of forming a welding part by welding the outer circumferential surfaces of two consecutive block cores among the multiple block cores to a third length shorter than twice the first length in the first direction, wherein in the welding step, multiple imaginary lines, which are obtained by extending in the first direction from some of the multiple welding parts formed on any one of the multiple block cores, are spaced apart from each other by a predetermined interval. The block cores include block laminated cores manufactured by the method.

[FIG. 3]

## Description

Technical Field

The present disclosure relates to a core of a motor, and to a core having low iron loss occurring in the core and excellent flatness and perpendicularity and a manufacturing method thereof.

Background Art

The demand for energy conservation has become a major concern due to the policy of imposing carbon taxes worldwide. In accordance with the eco-friendly policy, high efficiency is being emphasized in electrical devices such as motors and generators, and efficiency regulations that started in Europe are being legislated worldwide.

Electric devices such as motors are composed of a stator as a stationary element and a rotor as a rotating element. The stator and rotor require excellent magnetic properties, and the rotor additionally requires high strength properties that may withstand high-speed rotation. The core is made in a single mass by stacking non-oriented electrical steel sheets in which the magnetic field flows well in any direction in the stator and rotor.

The stator is manufactured by stacking multiple electrical steel sheets and then fastening the same in various ways to fix the individual electrical steel sheets. After that, it is in the structure in which the conductor winding is inserted into the core slot to supply electricity. The rotor goes through an operation of stacking and fixing multiple electrical steel sheets. A permanent magnet may be inserted into the rotor core, and a magnetic source may be provided by winding or die casting a conductor. On the other hand, it is also possible to construct the core itself without using any magnetic source at all.

Research (10-2438474 B1, KR 10-2448799 B1) on manufacturing electrical steel sheets with excellent magnetic properties for high efficiency of electrical devices has been introduced in various ways. Despite the advancement of material technology, it is difficult for the efficiency of electrical devices to reach the market demand level. Since the difficulty of material development is very high, there are still many challenges to be solved, and in the process of processing materials into core parts, the characteristics may be worse than the raw materials. In addition, the efficiency varies depending on the core structure and the method of constructing the device.

The method of fixing by laminating the core mainly used interlocking, welding (KR10-0584116 B1) and the like, but recently, a method of bonding electrical steel sheets to each other (KR10-2382699 B1, KR10-0950339 B1) has also been suggested. Although recent bonding methods are theoretically very excellent technologies, they do not provide uniform bonding to the core surface and strong bonding thereof is not continuously maintained, and thus the reality is that the defect rate in core manufacturing is very high, which limits their application. As a result, in industries where manufacturing yield is important, interlocking or welding is mostly applied in core manufacturing.

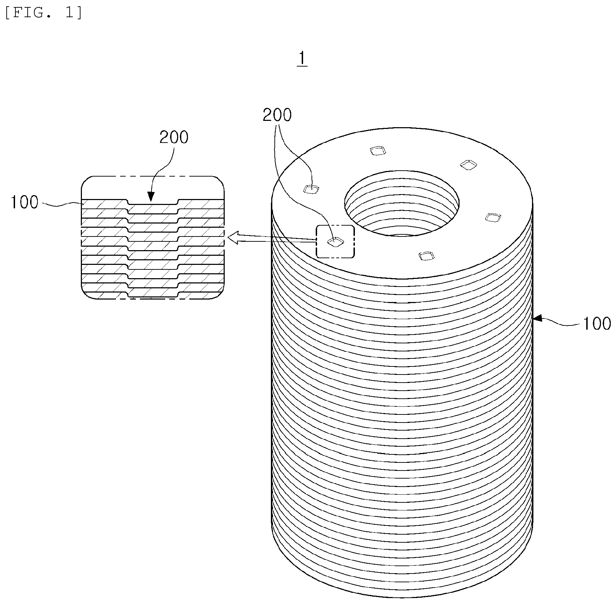

FIG. 1 illustrates an existing core with the entire interlocking fastening. FIG. 1 illustrates an existing core (1) in which electrical steel sheets (100) have an interlocking bonding portion (200) at once. Interlocking fastening is a method in which a certain portion is deformed by mechanically applying pressure thereto.

In interlocking fastening, even if excellent electrical steel sheet material is used, the performance of the electrical device deteriorates due to processing and assembly during the core manufacturing process, making it difficult to achieve high efficiency characteristics. Interlocking causes mechanical impact to force the bending of the electrical steel sheet, which makes the magnetic characteristics very poor. Since the magnetic field hardly flows in the electrical steel sheet near the interlocking, the magnetic field flow is distorted, and the magnetic field that cannot flow due to the interlocking flows by finding another path with less magnetic resistance, causing a bottleneck phenomenon. The distorted magnetic field distorts the frequency, causing a phenomenon in which a high frequency is synthesized into the basic waveform, and the magnetic field collected due to the bottleneck phenomenon increases the operating magnetic flux density. When the frequency is synthesized or the magnetic flux density is high, the iron loss occurring in the electrical steel sheet increases rapidly, resulting in poor core loss.

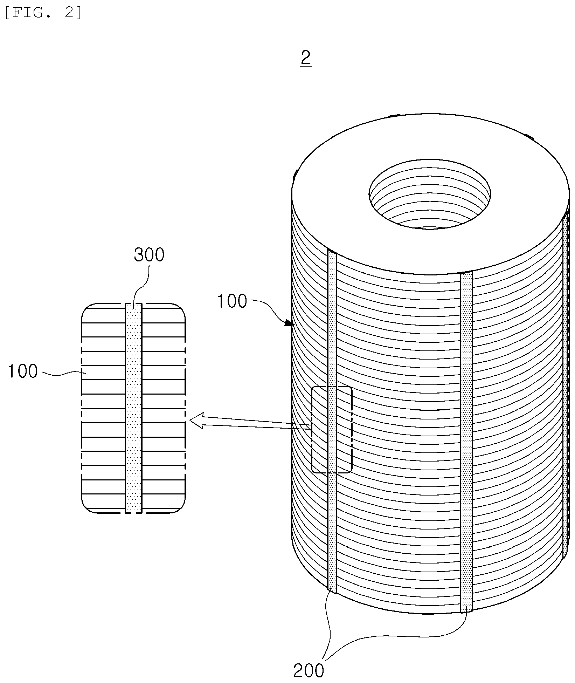

FIG. 2 illustrates a welded coupled core (2). In the existing cases, as illustrated in FIG. 2, the coupling was performed by welding (300) on the entire outer peripheral surface of the electrical steel sheet (100).

If an electrical steel sheet is disposed in a location in which a magnetic field flows, an eddy current is induced in the electrical steel sheet, which causes eddy current loss. A method for reducing this loss is to manufacture the electrical steel sheet thinly and apply coating with excellent insulation to the upper and lower surfaces of the electrical steel sheet to form electrical insulation between the electrical steel sheets. However, the welding used as a fastening method is performed on the side surface of the core, which destroys the insulation between the electrical steel sheets and has a side effect of artificially providing an electric circuit to conduct electricity. This causes a rapid increase in eddy current loss and deterioration in the no-load loss of the core. If the number of welding parts is large, the number of interlayer insulation breakdowns of electrical steel sheets increases and the amount of induced eddy current also increases, which causes a rapid deterioration in no-load loss due to interlayer conduction.

Therefore, a core and a method for manufacturing the core are needed to resolve the above problems.

Disclosure of Invention

Technical Problem

An aspect of the present disclosure is to provide a core having excellent perpendicularity and flatness and low iron loss to resolve the above problems.

Solution to Problem

According to an aspect of the present disclosure, to obtain the above-mentioned purpose, the present disclosure provides a core of a motor formed as follows and a method of manufacturing the same.

According to an aspect of the present disclosure, a method for manufacturing a block laminated core includes a block core operation of laminating and coupling electrical steel sheets in a first direction and forming block cores having a first length, a lamination operation of rotating a plurality of the block cores at a first angle in a second direction, a circumferential direction of the block core, and laminating the block cores to have a second length in the first direction, and a welding operation, in which a welding part is formed by welding outer circumferential surfaces of two consecutive block cores among the plurality of block cores to a third length shorter than twice the first length in the first direction, and the welding part is formed as a plurality of welding parts, and any two adjacent welding parts among the plurality of welding parts are spaced apart from each other by a predetermined interval, thereby providing a core having excellent perpendicularity and flatness, low iron loss, and low no-load loss.

In addition, in the block core operation, the electrical steel sheets may be interlocking coupled.

In addition, the second length may be a multiple of n of the first length, and the first angle may be according to the following mathematical expression 1.

$$\text{Mathematical Expression 1: } \theta 1 = 360°/n$$

In this case, $\theta 1$ is a first angle (°), and n is a natural number.

In addition, the second length may be 3 to 8 times the first length.

In addition, in the welding operation, the welding part may be formed in multiples in the same position in the first direction and spaced apart in the second direction.

In addition, a heat treatment operation of performing a heat treatment performed to remove residual stress of the block cores prior to the lamination operation may further be included.

According to an aspect of the present disclosure, a block laminated core includes a block core in which electrical steel sheets are laminated to have a first length in a first direction and which includes a coupling portion of an interlocking coupling, a block laminate in which a plurality of the block cores are laminated to have a second length in the first direction, and a welding part formed on an outer peripheral surface of the block laminate to have a third length shorter than twice the first length in the first direction to connect two adjacent block cores among the plurality of block cores included in the block laminate, thereby providing a core having excellent perpendicularity and flatness, low iron loss, and low no-load loss.

In addition, a virtual first extension line connecting a punching line formed on the electrical steel sheets forming the block core to a center of the block core is formed in plural, and the first extension lines may be formed in the same position in a second direction, a radial direction within one block core, and an angle between the first extension lines formed on any two block cores disposed adjacently in the first direction among the plurality of block cores may form a first angle.

In addition, the second length may be 3 to 8 times the first length.

In addition, the welding part coupling the same two block cores among the plurality of block cores may be formed as a plurality of welding parts, and a second angle, which is a smallest angle among angles formed by any two third extension lines among third extension lines that connect the plurality of welding parts coupling the same two block cores to the center of the block cores, may be 10 to 180°.

In addition, the electrical steel sheets may be non-oriented electrical steel sheets including, in weight %, Si: 0.25 to 4.8%, Al: 0.05 to 2.0%, Mn: 0.15 to 1.0%, C: 0.0015 to 0.0040%, N: 0.0005 to 0.0030%, S: 0.0005 to 0.003%, Mo: 0.0050 to 0.015%, Ti: 0.0005 to 0.0020%, Nb: 0.0005 to 0.0040%, V: 0.0005 to 0.0040%, and a remainder of Fe and inevitable impurities.

Advantageous Effects of Invention

The present disclosure may provide a core having excellent perpendicularity and flatness, low iron loss, and low no-load loss through the structure as above.

Brief Description of Drawings

FIG. 1 is a perspective view illustrating an existing core.
FIG. 2 is a perspective view illustrating another existing core.
FIG. 3 is a flow chart for a method for manufacturing a block laminated core according to an embodiment of the present disclosure.
FIG. 4 is a drawing illustrating a block core according to an embodiment of the present disclosure.
FIG. 5 is a drawing illustrating a lamination operation in a method for manufacturing a block laminated core according to an embodiment of the present disclosure.
FIG. 6 is a drawing illustrating a first angle of a lamination operation in a method for manufacturing a block laminated core according to an embodiment of the present disclosure, and illustrates a first extension line connecting a punching line of a block core laminated on one plane and a core center.
FIG. 7 is a schematic diagram of a block laminated core manufactured by a method for manufacturing a block laminated core according to an embodiment of the present disclosure, and is a drawing illustrating a welding operation in the method for manufacturing a block laminated core.
FIG. 8 is a drawing illustrating a second angle in a block laminated core according to an embodiment of the present disclosure.

Best Mode for the Invention

Hereinafter, detailed embodiments of the present disclosure will be described with reference to the attached drawings. However, the idea of the present disclosure is not limited to the presented embodiments, and those skilled in the art who understand the idea of the present disclosure may easily propose other backward inventions or other embodiments included within the scope of the idea of the present disclosure by adding, changing, or deleting other components, or the like, within the scope of the same idea, but this is also included within the scope of the idea of the present disclosure.

A core according to an embodiment of the present disclosure is formed using an electrical steel sheet.

Generally, an electrical steel sheet is provided as a mother coil in the form of a roll with a width of 980 to 1200 mm. In the manufacturing technology of electrical steel sheets, it is very difficult to precisely manage the thickness of the electrical steel sheet evenly during the rolling process, and thus mother coils have generally the characteristic of being thickest near the center of the width and becoming thinner towards the edge. This thickness deviation is within 5 to 10% of the total thickness. This may cause shape problems when forming a core. Since the diameter of the core is tens to hundreds of mm, the entire width of the mother coil provided by the steel company is subjected to a slitting process in which tall processing is performed to be processed within hundreds of mm to fit the core diameter. After the slitting process, multiple electrical steel sheets are laminated through punching to manufacture the core. During the punching process, a punching line may be formed, and thus the punching position may be known.

Generally, problems occur in the core due to the thickness deviation, but especially in the case of a drive motor in which the core diameter reaches hundreds of mm and the laminating height of the electrical steel sheets exceeds 100 mm, it is very important to secure the perpendicularity and flatness of the core due to the thickness deviation of the electrical steel sheets according to the position of the mother coil. In the present disclosure, the core is manufactured using such a general electrical steel sheet, and thus the purpose is to resolve the above-mentioned problems.

According to an embodiment of the present disclosure, the electrical steel sheet of the core may be a non-oriented electrical steel sheet containing, in wt%, Si: 0.25 to 4.8%, Al: 0.05 to 2.0%, Mn: 0.15 to 1.0%, C: 0.0015 to 0.0040%, N: 0.0005 to 0.0030%, S: 0.0005 to 0.003%, Mo: 0.0050 to 0.015%, Ti: 0.0005 to 0.0020%, Nb: 0.0005 to 0.0040%, and V: 0.0005 to 0.0040%, the remainder being Fe and inevitable impurities, but is not limited thereto and may be formed of an electrical steel sheet of other components.

Si: 0.25 to 4.8%

Silicon (Si) serves to increase the resistivity of the material, thereby reducing iron loss, and to increase strength through solid solution strengthening. If too little silicon is added, iron loss and strength improvement effects may be insufficient. If too much silicon is added, the brittleness of the material increases, which rapidly reduces rolling productivity and may cause problems by forming oxide layers and oxides on the surface layer portion that are harmful to magnetism. Therefore, silicon may be included in an amount of 0.25 to 4.8%. More preferably, it may be included in an amount of 3.2 to 3.6%.

Al: 0.05 to 2.0%

Al serves to increase the resistivity of the material, thereby reducing iron loss, and to increase strength through solid solution strengthening. If too little aluminum is added, fine nitrides may be formed or the oxide layer on the surface layer portion may not be densely formed, making it difficult to obtain the effect of improving magnetism. If too much aluminum is added, nitrides are excessively formed, which deteriorates magnetism and causes problems in all processes such as steelmaking, continuous casting and the like, which may significantly reduce productivity. Therefore, 0.05 to 2.0% of aluminum may be included. More preferably, 0.6 to 1.0% may be included.

Mn: 0.15 to 1.0%

Manganese (Mn) serves to improve iron loss by increasing the resistivity of the material and to form sulfides. If too little manganese is added, fine MnS is formed, which causes magnetism to deteriorate, and if too much manganese is added, fine MnS is excessively precipitated and promotes the formation of {111} texture, which is unfavorable to magnetism, which causes a rapid decrease in magnetic flux density. Therefore, 0.15 to 1.0% of manganese may be included. More preferably, 0.30 to 0.75% may be included.

C: 0.0015 to 0.0040%

Carbon (C) causes magnetic aging and combines with other impurity elements to form carbides, which lowers magnetic properties, but improves strength by hindering dislocation movement. If too little carbon is added, the strength improvement effect may be insufficient. If too much carbon is added, fine carbides may increase, rapidly deteriorating magnetism. Therefore, carbon may be included in an amount of 0.0015 to 0.0040%. More preferably, it may be included in an amount of 0.0020 to 0.0038%.

N: 0.0005 to 0.0030%

Nitrogen (N) not only forms fine AlN precipitates inside the base material, but also combines with other impurities to form fine precipitates, inhibiting grain growth and worsening iron loss, but improving strength. If too little nitrogen is added, the strength may not be sufficiently improved. If too much nitrogen is added, fine nitrides may increase, rapidly deteriorating iron loss. Therefore, nitrogen may be included in an amount of 0.0005 to 0.0030%. More preferably, it may be included in an amount of 0.0008 to 0.0018%.

S: 0.0005 to 0.003%

It is desirable to manage sulfur (S) at a low level because it forms fine precipitates, MnS and CuS, which deteriorate magnetic properties and hot workability. However, if too little sulfur is added, the magnetic flux density may decrease. Therefore, sulfur may be included in an amount of 0.0005 to 0.003%. More preferably, it may be included in an amount of 0.0010 to 0.0025%.

Mo: 0.0050 to 0.015%

Molybdenum (Mo) serves to segregate at grain boundaries during annealing to suppress the development of {111} texture, which is detrimental to magnetism, and to form fine carbides during cooling to improve strength. If too little molybdenum is added, the effect may be insufficient. If too much molybdenum is added, it may promote the formation of carbides, thereby deteriorating magnetism. Therefore, molybdenum may be included in an amount of 0.0050 to 0.015%. More preferably, it may be included in an amount of 0.0060 to 0.0090%.

Ti: 0.0005 to 0.0020%, Nb: 0.0005 to 0.0040%, V: 0.0005 to 0.0040%

Titanium (Ti), niobium (Nb), and vanadium (V) have a very strong tendency to form precipitates in steel, and deteriorate iron loss by forming fine carbides, nitrides, or sulfides inside the base material, thereby inhibiting grain growth and domain wall displacement. Therefore, it is necessary to appropriately control the upper limits of titanium, niobium, and vanadium. On the other hand, if they are included too little, the strength of the electrical steel sheet may be significantly reduced. Therefore, titanium, niobium, and vanadium may be included in an amount of 0.0005 to 0.0020%, respectively. More preferably, they may be included in an amount of 0.0007 to 0.0018%, respectively.

The electrical steel sheet may contain the remaining iron (Fe) and inevitable impurities.

The non-oriented electrical steel sheet generally used may have a density of 7.51 g/cm3 or more, and may be formed with a thickness of 0.1 to 0.65 mm, but is not limited to the thickness and density.

The block laminated core and method for manufacturing a block laminated core below are described assuming that they are formed with the electrical steel sheet described above, but they may also be formed with electrical steel sheets having different components and characteristics.

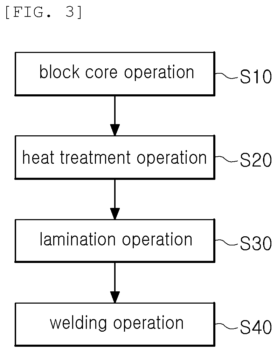

FIG. 3 illustrates a flow chart of a method for manufacturing a block laminated core according to an embodiment of the present disclosure.

The method for manufacturing a block laminated core according to an embodiment of the present disclosure includes a block core operation (S10), a lamination operation (S30), and a welding operation (S40). In addition, the method for manufacturing a block laminated core may further include a heat treatment operation (S20).

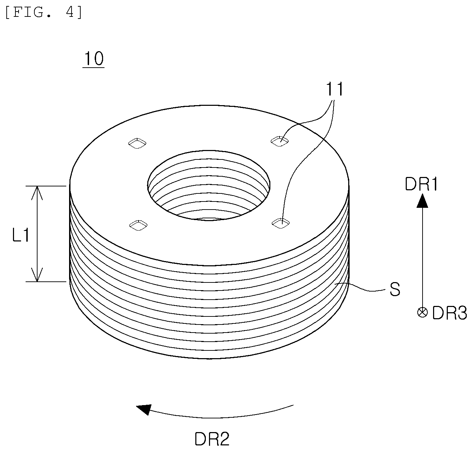

The block core operation (S10) is an operation of manufacturing a block core (10, see FIG. 4) by laminating and interlocking-coupling electrical steel sheets.

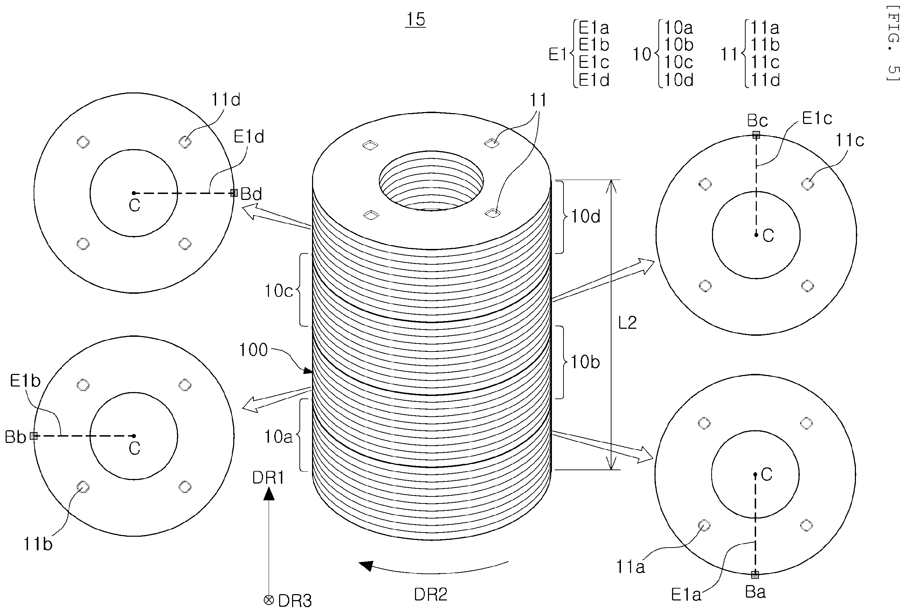

The lamination operation (S30) is an operation of forming a block laminate (15, see FIG. 5) by laminating the block cores (10).

The welding operation (S40) is an operation of welding and connecting the outer peripheral surface of the block laminate (15) so that the plurality of block cores (10) are maintained in a laminated state in the lamination operation (S30).

According to an embodiment of the present disclosure, a heat treatment operation (S20) may be further included in which heat treatment is performed to remove residual stress of the block core before the lamination operation (S30).

The heat treatment operation (S20) may be an operation in which heat treatment such as atmosphere heat treatment, high-frequency heat treatment and the like is performed, and the detailed method is not limited.

The core should be heated at a maximum temperature of 750°C to 880°C, which may remove residual stress generated during the punching process of the electrical steel sheet, and should be maintained at that temperature for a certain period of time, and a reducing atmosphere is suitable, but the maximum temperature maintenance time may vary depending on the heat treatment method.

For example, in the heat treatment operation (S20), nitrogen or vacuum should be continuously supplied to the sealed heat treatment facility to maintain a reducing atmosphere. Since heat treatment of a core connected by welding causes deformation of the welding part and distortion of the core shape, it is advantageous to perform the heat treatment before the welding operation (S40), and heat treatment may be performed after the block core operation (S10), for example, on the interlocked block core. If the heat treatment temperature is low or the maximum temperature maintenance time is short, stress is not eliminated, and if the temperature is too high or the maximum temperature maintenance time is long, a problem in which cracks is formed in the coating layer on the surface of the electrical steel sheet may occur, resulting in poor insulation, and therefore, heat treatment at an appropriate temperature may be important. The appropriate temperature may vary depending on the interlocking connection and the material, shape, or the like of the electrical steel sheet, and is therefore not limited to a specific temperature. The heat treatment operation (S20) according to an embodiment of the present disclosure is included, and thus a more excellent core may be manufactured with less no-load loss.

Hereinafter, the first direction (DR1) means the direction in which the electrical steel sheets (100) or the block cores (10) to be described below are laminated, and the second direction (DR2) may mean the circumferential direction of the block core (10). In addition, the third direction (DR3) means the direction perpendicular to the first direction (DR1).

FIG. 4 is a drawing illustrating the block core operation in the method for manufacturing a block laminated core according to an embodiment of the present disclosure.

For example, the block core operation (S10) is an operation of forming a block core (10) of a first length (L1) by laminating and coupling the electrical steel sheets (100) in the first direction (DR1).

The first length (L1) is a preset length, and may be set in consideration of the fastening force for combining the electrical steel sheets (100), the second length (L2, see FIG. 5) that is the length of the block laminate (15, see FIG. 5) to be described below, and the like.

For example, the electrical steel sheets (100) that are punched out may be laminated and then interlocked to be manufactured into a block core (10). There is no limitation on the shape of the interlocking.

A coupling portion (11) formed in the block core (10) may be an interlocking coupling. Interlocking is a method of mechanically bending a plurality of electrical steel sheets (100) into a certain shape to couple the same.

There may be a plurality of coupling portions (11) in one block core (10), and if the number of coupling portions (11) is small, the fastening strength is insufficient, causing a defect in which each sheet of electrical steel sheet (100) falls off.

If the number of coupling portions (11) due to interlocking fastening is large, the magnetic properties of the electrical steel sheet (100) deteriorate and the iron loss deteriorates because the interlocking coupling is a method of mechanically bending the shape to couple. Therefore, it is important to form an appropriate number of coupling portions (11).

For example, it is advantageous to form at least three coupling portions (11) due to interlocking coupling included in the block core (10), and this may vary depending on the diameter and first length (L1) of the block core (10).

If there are two or less coupling portions (11), the fastening strength is weak, causing a defect in which a single electrical steel sheet (100) easily falls off from the core. If the number of coupling portions (11) is increased, the fastening strength improves, but the iron loss worsens.

Therefore, the block cores (10) may be coupled including the coupling portions (11) within 4 to 8.

As a comparison value, when manufacturing a core by laminating electrical steel sheets (100) at once, it is common to perform interlocking coupling with at least 6 or more coupling portions (11).

For example, in the block core operation (S10), the interlocking may be performed simultaneously with the punching operation in the mold of the electrical steel sheet to shorten the time. Since the time may be shortened by performing the punching and interlocking simultaneously in the mold, it may be manufactured in this manner.

By including the block core operation (S10) as described above, a core of a motor with excellent fastening strength and excellent iron loss may be manufactured.

FIG. 5 is a drawing illustrating the lamination operation in a method for manufacturing a block laminated core according to an embodiment of the present disclosure.

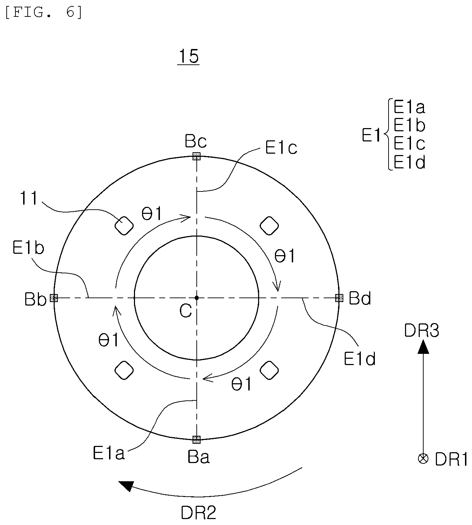

FIG. 6 is a drawing illustrating a plurality of first extension lines included in a block laminate in a laminated state according to an embodiment of the present disclosure on a single plane.

The lamination operation (S30) according to an embodiment of the present disclosure may be an operation of forming a block laminate (15) by rotating a plurality of the block cores (10a, 10b, 10c, 10d) in a second direction (DR2), which is a circumferential direction of the block cores (10a, 10b, 10c, 10d), at a first angle (θ1) and laminating the same to have a second length (L2) in the first direction (DR1).

For example, n block cores (10a, 10b, 10c, 10d) manufactured in the block core operation (S10) may be laminated in the first direction (DR1).

The second length (L2), which is the length of the block laminate (15) and the length of the core, is n times the first length (L1). For example, since a plurality of block cores (10a, 10b, 10c, 10d) are laminated, and the block core (10a, 10b, 10c, 10d) is formed with a first length (L1), the length obtained by multiplying the block cores (10a, 10b, 10c, 10d) by n times, the number of stacks in the first direction (DR1), may become the second length (L2).

In addition, the block cores may be rotated by a first angle (θ1) in the second direction (DR2) when laminated. If the core is manufactured by laminating the block cores (10) without rotating the same in the second direction (DR2), the thickness deviation existing from the mother coil accumulates as is, causing problems in the perpendicularity and flatness of the electrical steel sheet (100). Therefore, laminating while rotating the same in the second direction (DR2) may solve the above problems and provide a coil with excellent perpendicularity and flatness.

For example, the first angle (θ1) may follow the following [Mathematical Expression 1].

$$[\text{Mathematical Expression 1}]$$

$$\theta 1 = 360° / n$$

In this case, θ1 is the first angle (°) and n is a natural number.

Since it is rotated at the first angle (θ1) in the second direction (DR2) to produce the core with excellent perpendicularity and flatness, it may be important to evenly distribute the thickness deviation that existed in the mother coil throughout the block laminate (15).

Therefore, the value obtained by dividing the total internal angle of the block laminate (15), 360°, by n, the number of block cores (10a, 10b, 10c, 10d) to be laminated, may be set as the first angle (θ1).

At this time, the smaller the first angle (θ1), the better the perpendicularity and flatness of the core. However, even if the perpendicularity and flatness are improved as the first angle (θ1) decreases, the number of block cores (10) that should be laminated increases accordingly, which increases the number of manufacturing processes and may thus be economically and time-wise disadvantageous.

Therefore, the second length (L2) may be formed to be 3 to 8 times the first length (L1). In addition, according to the mathematical expression 1, the first angle (θ1) may be 45 to 120°. In addition, the number of stacks of the block cores (10) may be 3 to 8. However, it is not limited to the first angle (θ1) and the number of stacks of the block cores (10) as mentioned above.

For example, in the lamination operation (S30), the first angle (θ1) may be based on the punching line (B).

With reference to FIGS. 5 and 6, an example of four block cores being laminated in the lamination operation will be described.

The virtual first extension line connecting the punching line (Ba, Bb, Bc, Bd) formed in the electrical steel sheets (100) forming the block core (10a, 10b, 10c, 10d) to the center (C) of the block core, within one block core (10a, 10b, 10c, 10d), is formed as a plurality of extension lines (E1a, E1b, E1c, E1d), and the angles between the first extension lines (E1a, E1b, E1c, E1d) may be the same within one block core (10a, 10b, 10c, 10d).

Within one block core (10a, 10b, 10c, 10d), the electrical steel sheets are laminated in the first direction (DR1) together with the punching, and may thus be laminated without rotation in the second direction (DR2). Therefore, the virtual first extension line (E1a, E1b, E1c, E1d) connecting the punching line (Ba, Bb, Bc, Bd) and the center (C) of the block core in one block core (10a, 10b, 10c, 10d) may be one.

In addition, the first angle may mean the angle between the first extension lines (E1a, E1b, E1c, E1d) of two block cores (10a, 10b, 10c, 10d) adjacent to each other in the first direction (DR1) among the plurality of block cores (10a, 10b, 10c, 10d), and the first angle (θ1) may be defined as an internal angle.

The plurality of laminated block cores (10) may be sequentially referred to as the first block core (10a), the second block core (10b), the third block core (10c), and the fourth block core (10d) from the bottom.

At this time, the angle formed by the first extension line (E1a) of the first block core (10a) and the first extension line (E1b) of the second block core (10b) may be the first angle (θ1). In addition, the angle between the first extension line (E1b) of the second block core (10b) and the first extension line (E1c) of the third block core (10c) and the angle between the first extension line (E1c) of the third block core (10c) and the first extension line (E1d) of the fourth block core (10d) may be the first angle (θ1).

In addition, the number of stacked block cores (10), n, is 4, the second length (L2) is 4 times the first length (L1), and the first angle (θ1) may be 90°. However, it is not limited to the above detailed values and may vary depending on the design.

Since the block cores (10a, 10b, 10c, 10d) included in the block laminate (15) are formed with coupling portions (11a, 11b, 11c, 11d) that are distinguished by each block core (10a, 10b, 10c, 10d), the interlocking fastening force by the coupling portions (11a, 11b, 11c, 11d) is sufficient by maintaining the electrical steel sheets (100) of the block core (10a, 10b, 10c, 10d) in a coupled state.

The core laminate (15) is formed by including the lamination operation (S30) as described above, a core with excellent perpendicularity and flatness may be manufactured.

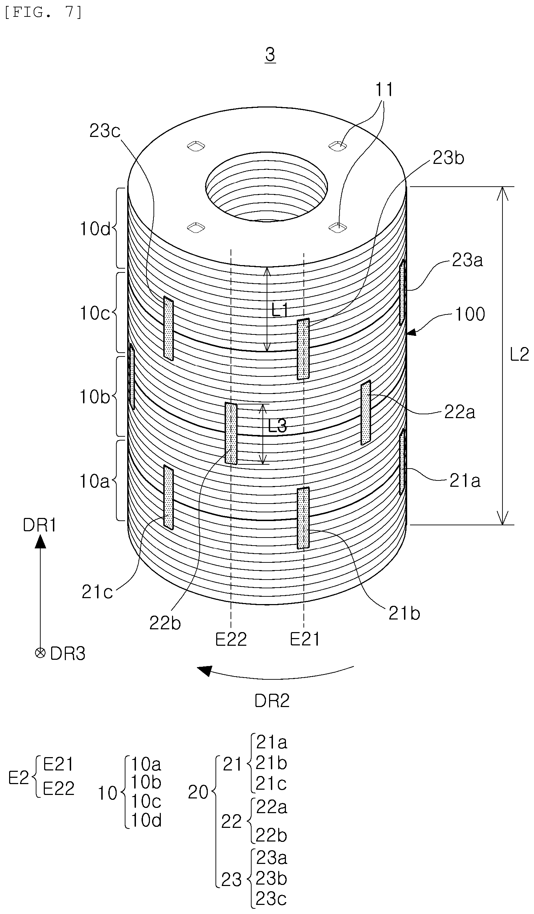

FIG. 7 is a drawing illustrating a welding operation in a method for manufacturing a block laminated core according to an embodiment of the present disclosure, and schematically illustrates a block laminated core according to an embodiment of the present disclosure.

For example, the welding operation (S40) is an operation of completing a block laminated core (3) by forming a welding part (20) welded in the first direction (DR1) with a third length (L3) shorter than twice the first length (L1) on the outer peripheral surface of two block cores (10) that are continuously laminated in the first direction (DR1) among the plurality of block cores (10).

If the third length (L3) is greater than or equal to twice the first length (L1), it affects three or more continuously laminated block cores (10), so a problem of conducting current between the block cores (10) connected by the welding part (20) may occur. Therefore, the welding part (20) may be formed with a third length (L3) shorter than twice the first length (L1).

Describing referring to FIG. 7, the plurality of laminated block cores (10a, 10b, 10c, 10d) may be sequentially referred to as the first block core (10a), the second block core (10b), the third block core (10c), and the fourth block core (10d) from the bottom.

At this time, if the welding part (20) connecting the first block core (10a) and the second block core (10b), the first-second welding part (21), is greater than or equal to three times the first length (L1), it is connected continuously to the third block core (10c). In this case, a problem of current conduction occurs because current flows to the third block core (10c) through the first-second welding part (21). In addition, since the insulation of the electrical steel sheets (100) included in the connected first to third block cores (10a, 10b, 10c) is completely destroyed and current is transmitted, the iron loss may rapidly increase, and thus the welding part (20) should be formed with a third length (L3) that is less than twice the first length (L1).

This is the same for the 2-3 welding part (22), which is the welding part (20) connecting the second block core (10b) and the third block core (10c), and the 3-4 welding part (23), which is the welding part (20) connecting the third block core (10c) and the fourth block core (10d).

For example, an virtual line extending a portion of the plurality of welding parts (20) formed on one of the plurality of block cores (10a, 10b, 10c, 10d) in the first direction (DR1) may be defined as a second extension line (E2). At this time, the second extension (E2) is formed as a plurality of second extension lines (E2), and any two of the plurality of second extension lines (E2) may be formed to be spaced apart from each other without overlapping.

If the second extension lines (E2) overlap, heat damage on the side surface of the core may accumulate, which may increase iron loss, and thus the welding part (20) may be disposed so that the second extension lines (E2) are not positioned on the same line.

Referring to FIG. 7, describing the second block core (10b) as an example, which is any one block core (10a,10b,10c,10d) among the plurality of block cores (10a, 10b, 10c, 10d), a 1-2 welding part (21) formed to connect the first block core (10a) and the second block core (10b), and a 2-3 welding part (22) formed to connect the second block core (10b) and the third block core (10c) may be included. Therefore, a portion of the 1-2 welding part (21) and a portion of the 2-3 welding part (23) may be formed in the second block core (10b).

In addition, a virtual extension line that extends a portion of the 1-2 welding part (21) in the first direction (DR1) may be defined as a 2-1 extension line (E21), and a virtual extension line that extends a portion of the 2-3 welding part (22) in the first direction (DR1) may be defined as a 2-2 extension line (E22).

At this time, if the 2-1 extension line (E21) and the 2-2 extension line (E22) overlap, heat damage on the side surface of the core may accumulate due to the 1-2 welding part (21) and the 2-3 welding part (22), which may cause a tendency for iron loss to increase. Therefore, the 2-1 extension line (E21) and the 2-2 extension line (E22) may be formed apart from each other.

However, some second extension lines (E2) of the welding parts (20) formed on other block cores (10a, 10b, 10c, 10d), other than on the same block core (10a, 10b, 10c, 10d), among the plurality of block cores (10a, 10b, 10c, 10d), may not be spaced apart from each other. For example, the second extension line (E2) that extends a portion of the 1-2 welding part (21) formed on the first block core (10a) and the second extension line (E2) that extends a portion of the 3-4 welding part (23) formed on the third block core (10c) may be the same extension line as the 2-1 extension line (E21).

For example, in the welding operation (S40), the welding part (20) may be formed in plural while being spaced apart from each other in the second direction (DR2), in the same position in the first direction (DR1).

The welding part (20) formed in the same position in the first direction (DR1) is plural, and the plurality of welding parts may be spaced apart from each other in the second direction (DR2).

Describing with reference to FIG. 7, the 1-2 welding part (21), the welding part (20) connecting the first block core (10a) and the second block core (10b), may be formed as a plurality of 1-2 welding parts (21a, 21b, 21c) spaced apart from each other in the second direction (DR2). This is because when connecting two adjacent block cores (10) in the first direction (DR1), coupling force may not be sufficient if only one welding part (20) is used. The same may be applied to the 2-3 welding part (22, 22a, 22b) and the 3-4 welding part (23, 23a, 23b, 23c).

In addition, in the welding operation (S40), the position where the welding part (20) is formed may be the outer peripheral surface of the core. Partial welding on the inner side of the slot or the side surface of the core including the gap between the rotor and the stator reduces the space in which the winding conductor is wound, which worsens the winding spot ratio and acts as friction when the electric device rotates, so it may be advantageous to form the same on the outer peripheral surface rather than the inner peripheral surface.

For example, in the welding operation (S40), the welding method may be TIG or laser welding, but is not limited thereto and may include all welding methods used in the industry.

By including the welding operation (S40) in this manner, a core with low iron loss of the motor, easy to manufacture, and economical to manufacture may be manufactured.

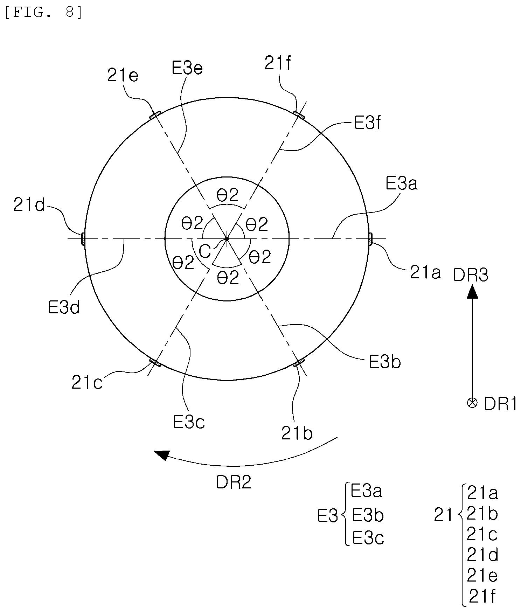

FIG. 8 is a drawing of a method for manufacturing a block laminated core according to an embodiment of the present disclosure, in which the first block core and the second block core, which are adjacent in the first direction, are coupled by the first-second welding part, as viewed from the first direction.

For example, the welding part (20) for coupling two identical block cores (10) among a plurality of block cores (10) is formed in plural, and a second angle ($\theta2$), which is the smallest angle among the angles formed by two third extension lines among third extension lines which are extension lines connecting the plurality of welding parts (20) for coupling the two identical block cores to the center of the block core (10), may be 10 to 180°.

Referring to FIG. 8, a third extension line (E3, E3a, E3b, E3c, E3d, E3e, E3f), which is a virtual extension line connecting the first-second welding part (21, 21a, 21b, 21c, 21d, 21e, 21f) that couples two identical block cores (10a, 10b), to the center (C) of the first block core (10a) or the second block core (10b), may also be formed in multiple numbers, and among the multiple third extension lines (E3, E3a, E3b, E3c, E3d, E3e, E3f), the smallest angle among the angles formed by two third extension lines (E3, E3a, E3b, E3c, E3d, E3e, E3f) that are adjacent to each other in the second direction (DR2) is the second angle ($\theta2$), and may be formed in a range of 10 to 180°. Since six 1-2 welding parts (21, 21a, 21b, 21c, 21d, 21e, 21f) are formed, the second angle ($\theta2$) may be 60°. The second angles ($\theta2$) may be different from each other, but the second angles ($\theta2$) formed by the welding parts (20) that couple two identical block cores (10) may be the same, which is advantageous for the coupling force. Therefore, a block laminate (15) in which a plurality of block cores are laminated has sufficient coupling force to maintain the laminated state, while reducing iron loss, so that an excellent core may be manufactured.

Hereinafter, in the block laminated core according to an embodiment of the present disclosure, the same configuration, content, and effect as described in the method for manufacturing a block laminated core are cited unless there are special circumstances. In addition, the block laminated core according to an embodiment of the present disclosure is referred to with reference to FIGS. 4 to 8.

A block laminated core (3) according to an embodiment of the present disclosure includes a block core (10) in which electrical steel sheets (100) are laminated to have a first length (L1) in a first direction (DR1) and which includes a coupling portion (11) of an interlocking coupling, a block laminate (15) in which a plurality of the block cores (10a, 10b, 10c, 10d) are laminated to have a second length (L2) in the first direction (DR1), and a welding part (20) formed on an outer peripheral surface of the block laminate (15) in the first direction (DR1) to connect two adjacent block cores (10a, 10b, 10c, 10d) among the plurality of block cores (10a, 10b, 10c, 10d) included in the block laminate (15), to have a third length (L3) shorter than twice the first length (L1).

For example, a plurality of first extension lines (E1), which are virtual extension lines connecting the punching lines (Ba, Bb, Bc, Bd) formed on the electrical steel sheets (100) and the centers (C) of the block cores (10a, 10b, 10c, 10d), are formed, the first extension lines (E1) are formed in the same position in the second direction (DR2) with an angle of 0 between the first extension lines (E1) within one of the plurality of block cores (10a, 10b, 10c, 10d), and the angle between the first extension lines (E1) formed on any two block cores (10a, 10b, 10c, 10d) disposed adjacently in the first direction (DR1) among the plurality of block cores (10a, 10b, 10c, 10d) may form a first angle ($\theta$1), and the first angle ($\theta$1) may be constant.

For example, the second length (L2) may be 3 to 8 times the first length (L1).

For example, the welding part (20) that couples two identical block cores (10a, 10b, 10c, 10d) among the plurality of block cores (10a, 10b, 10c, 10d) is formed in plural, and the second angle ($\theta$2), which is the smallest angle among the angles formed by any two extension lines (E3) among the third extension lines (E3) that are extension lines connecting the plurality of welding parts (20) that couple the two identical block cores (10a, 10b, 10c, 10d) and the centers of the block cores (10a, 10b, 10c, 10d), may be 10 to 180°. Therefore, the block laminated core (3) may provide excellent fastening strength while preventing the entire electrical steel sheet (100) from being electrically conductive.

Below, Table 1 illustrates a table comparing the block laminated core formed by the block laminated core manufacturing method according to an embodiment of the present disclosure with comparative examples.

The no-load loss was measured under the condition that a copper winding was wound on a core laminated so that the height of a single core was 100 mm by punching out a non-oriented electrical steel sheet having a thickness of 0.27 mm with a diameter of 230mm, and then power is applied by connecting an inverter.

If the punched electrical steel sheets are not fastened by being laminated without rotation, the perpendicularity and flatness representing the core shape are poor due to the accumulated thickness deviation of the electrical steel sheets. In addition, since there is no fastening, it is impossible to measure the fastening strength itself, and since there is no processing stress due to fastening, the no-load loss at this time is set to 100%.

Under the above conditions, when the first angle that is the rotation angle, is gradually reduced when the block cores are laminated, experiments were conducted by changing to 180°, 120°, 90°, and 45° based on the case of lamination without rotation, and it was confirmed that the perpendicularity and flatness gradually improved as a result of the experiment, and based thereon, the experiment was conducted as illustrated in the table below.

[Table 1]

| | First Angle (°) | Fastening method and heat treatment of Electrical steel sheets | Interlocking Fastening Number | Internal angle(°, second angle) between welding parts and Number of welds joining two block cores | Perpendicularity and Flatness | No-load Loss Ratio (%) | Fastening Strength |
|---|---|---|---|---|---|---|---|
| Comparative Example 1 | 90 | Entire Interlocking | 6 | - | Excellent | 108.50 | Defective |
| Comparative Example 2 | 90 | Entire Interlocking | 12 | - | Excellent | 115.30 | Poor |
| Comparative Example 3 | 90 | Entire Welding | - | 180 degrees/2 | Defective | 117.60 | Poor |
| Comparative Example 4 | 90 | Entire Welding | - | 90 degrees/4 | Good | 131.60 | Excellent |
| Comparative Example 5 | 90 | Entire Welding | - | 60 degrees/6 | Excellent | 142.30 | Excellent |
| Comparative Example 6 | 90 | Entire Welding after Block Core Interlocking | 6 | 90 degrees/4 | Excellent | 147.90 | Excellent |
| Example 1 | 120 | Partial Welding after Block Core Interlocking | 6 | 90 degrees/4 | Good | 115.10 | Excellent |

(continued)

| | First Angle (°) | Fastening method and heat treatment of Electrical steel sheets | Interlocking Fastening Number | Internal angle(°, second angle) between welding parts and Number of welds joining two block cores | Perpendicularity and Flatness | No-load Loss Ratio (%) | Fastening Strength |
|---|---|---|---|---|---|---|---|
| Example 2 | 90 | Partial Welding after Block Core Interloc king | 6 | 90 degrees/4 | Excellent | 114.70 | Excellent |
| Example 3 | 90 | Partial Welding after Block Core Interlocking | 6 | 45 degrees/8 | Excellent | 118.50 | Excellent |
| Example 4 | 90 | Partial Welding and Heat Treatment after Block Core Interlocking | 6 | 45 degrees/8 | Excellent | 109.50 | Excellent |

Comparative Example 1 is a block laminate formed by laminating four block cores, but there is no coupling portion in the individual block cores. Then, it is the laminated state by rotating the first angle by 90°. After that, coupling was performed at six places at 60-degree intervals as the entire block laminate by interlocking. In this case, the perpendicularity and flatness of the core are excellent, but a defect occurs in which the core fastening strength is not secured. Therefore, when the top portion of the core is lifted, there is a defect in which a portion of the core falls off or the gap between the electrical steel sheets included in the block core is severely widened. Comparative Example 2 is a block laminate manufactured in the same manner as Comparative Example 1, but the number of interlocking fastenings is increased to 12 and fastened at 30-degree intervals. The fastening strength was improved compared to Comparative Example 1, but it was somewhat insufficient to be determined as a good product. When the top portion of the core was lifted, the gap between the cores was less widened compared to Comparative Example 1, but in a side impact test, a phenomenon was observed where the cores fell due to a slight impact from the outside.

In this case, the side impact test is an experiment to compare the degree of coupling by applying a weak impact to the side surface of the core with a hammer, and is a test for impact that may occur during core transportation.

Comparative Example 3 is a block laminate formed by laminating four block cores like Comparative Example 1, but the individual block cores do not have coupling portions and are laminated while rotating at a first angle of 90°. After that, the entire welding is performed on the outer peripheral surface of the block laminate using the TIG welding method. The second angle between adjacent welding parts is 180°, forming two entire welding parts. Since Comparative Example 3 performs welding by applying an appropriate pressure to the core, a spring back phenomenon occurs in which the unwelded portion swells when welding at 180°, resulting in poor perpendicularity and flatness.

Comparative Example 4 is a block laminate formed by laminating four block cores in the same manner as Comparative Example 3, but the individual block cores do not have coupling portions and are laminated while rotating at a first angle of 90°. After that, the entire welding is performed on the outer peripheral surface of the block laminate using the TIG welding method. At this time, unlike Comparative Example 3, the internal angle between the welding parts is 90°, forming four welding parts. Comparative Example 4 had good perpendicularity and flatness, but a problem occurred in which the no-load loss ratio deteriorated rapidly to 131.6%.

In Comparative Example 5, a block laminate is formed and the entire welding is performed like in Comparative Example 3. At this time, unlike Comparative Example 3, the internal angle between the welding parts is 60°, forming six total welding parts. Comparative Example 5 has excellent core shape and fastening strength, but the no-load loss is very poor at 142.3%.

In Comparative Example 6, electrical steel sheets are laminated and six interlocking fastenings are performed, thereby manufacturing the block cores and the block cores are laminated while rotating at the first angle of 90°. Then, four total welding parts are formed with the internal angle between the welding parts being 90° through the entire welding. In this case, it can be seen that the no-load loss is the worst at 147.90%.

The examples 1 to 4 according to an embodiment of the present disclosure are confirmed.

The block laminated core (3) manufactured by performing the operations of manufacturing the block core (10) and then laminating by rotating the same according to the first angle (θ1) and by welding only a portion of the outer peripheral surface corresponds to examples 1 to 4. In addition, only example 4 was manufactured by additionally including the heat treatment operation (S20). In the examples, the third length (L3) is formed by respectively extending 1/4 of the first length (L1) up and down based on the laminated surface, and the total length corresponds to 1/2 of the first length (L1).

In example 1, three block cores (10) are laminated at the first angle (θ1) of 120°, and the second angle (θ2) is 90°, and the number of welding parts in the same position in the first direction (Dr1) is 4. Therefore, a total of 12 welding parts (20) were formed and manufactured on the block laminated core (3) formed with a total of 3 block cores (10).

In Example 2, as the first angle (θ1) is 90°, 4 block cores are laminated, and as the second angle (θ2) is 90°, similar to Example 1, the number of welding parts (20) in the same position in the first direction (DR1) is 4. Therefore, a total of 16 welding parts (20) were formed and manufactured on the block laminated core (3) formed with a total of 4 block cores (10), and the maximum value of the third length (L3) is set smaller in Example 2 than in Example 1.

Example 3 is similar to Example 2 in that the first angle is 90° and four block cores (10) are laminated, but the second angle (θ2) is 45° and the number of welding parts (20) in the same position in the first direction (DR1) is 8. Therefore, a total of 32 welding parts (20) are formed on the block laminated core (3) formed with a total of 4 block cores.

Example 4 is manufactured in the same manner as Example 3, but a heat treatment operation (S20) is performed before laminating the block cores to relieve residual stress due to processing and then manufactured.

The coupling portions (11) that fasten the block cores are interlocking fastening, and are manufactured as 6 in all of Examples 1 to 4. This was set as a standard because the fastening strength was excellent when six interlocking fastenings were performed internally according to Comparative Example 6.

According to the results of Example 1, the core shape, perpendicularity and flatness, were good, the fastening strength was excellent, and the no-load loss was good at 115.10%. The results of Example 2 showed that the no-load loss tended to decrease to about 114.7% compared to Example 1, which may be interpreted as the effect of further alleviating the thickness deviation of the electrical steel sheets, thereby forming the magnetic field within the core more evenly. In addition, the perpendicularity and flatness were better than those of Example 1. For example, the smaller the first angle, the better the perpendicularity and flatness.

Looking at the results of Example 3, the number of welding parts (20) in the same position in the first direction (DR1) increased, which was disadvantageous compared to Examples 1 and 2 due to the current conduction between the electrical steel sheets, resulting in a no-load loss of 118.5%. Although not illustrated in Table 1, the fastening strength was better than that of Example 2. Example 4 has the same conditions as Example 3, but additionally performed a heat treatment operation (S20), and the heat treatment condition at this time was to inject 100% nitrogen at a maximum temperature of 820 degrees for 1 hour. Accordingly, it can be seen that the no-load loss ratio was lowered to 109.50% compared to Example 3.

In Table 1 above, Comparative Examples 4 to 6 may be cores manufactured according to the existing manufacturing method, and compared to this, it can be seen that Examples 1 to 4 may manufacture cores with excellent perpendicularity and flatness, and similar or better fastening strength than the existing ones, while with the no-load loss ratio being much lower.

If included in a motor used in an electric vehicle, the driving distance of the electric vehicle will be much longer and safety will be improved by including the block laminated core (3) according to an embodiment of the present disclosure. Of course, the performance of a motor generally used, not an electric vehicle, may be much improved.

Although the present disclosure has been described above with reference to examples, the present disclosure is not limited to the above-described examples, and it goes without saying that modifications may be made and implemented by those skilled in the art without changing the technical idea of the present disclosure as claimed in the claims.

**Claims**

1. A method for manufacturing a block laminated core, comprising:

    a block core operation of laminating and coupling electrical steel sheets in a first direction and forming block cores having a first length;
    a lamination operation of rotating a plurality of the block cores at a first angle in a second direction, a circumferential direction, and laminating the block cores to have a second length in the first direction; and
    a welding operation of forming a welding part by welding outer circumferential surfaces of two consecutive block cores among the plurality of block cores to a third length shorter than twice the first length in the first direction, wherein in the welding operation, a plurality of virtual lines extending in the first direction from a portion of a plurality of the welding parts formed in one block core among the plurality of block cores are spaced apart.

2. The method for manufacturing a block laminated core of claim 1, wherein in the block core operation, the electrical steel sheets are interlocking coupled.

3. The method for manufacturing a block laminated core of claim 2, wherein the second length is a multiple of n of the first length, and

   the first angle is according to the following mathematical expression 1,

   $$\text{Mathematical Expression 1: } \theta 1 = 360° /n,$$

   where $\theta 1$ is the first angle (°), and n is a natural number.

4. The method for manufacturing a block laminated core of claim 3, wherein the second length is 3 to 8 times the first length.

5. The method for manufacturing a block laminated core of claim 1, wherein in the welding operation, the welding part is formed in multiples in the same position in the first direction and spaced apart in the second direction.

6. The method for manufacturing a block laminated core of claim 1, further comprising a heat treatment operation of performing a heat treatment performed to remove residual stress of the block cores prior to the lamination operation.

7. A block laminated core comprising:

   a block core in which electrical steel sheets are laminated to have a first length in a first direction and which includes a coupling portion of an interlocking coupling,
   a block laminate in which a plurality of the block cores are laminated to have a second length in the first direction, and
   a welding part formed on an outer peripheral surface of the block laminate to have a third length shorter than twice the first length in the first direction to connect two adjacent block cores among the plurality of block cores included in the block laminate.

8. The block laminated core of claim 7, wherein a virtual first extension line connecting a punching line formed on the electrical steel sheets forming the block core to a center of the block core is formed in plural, and the first extension lines are formed in the same position in a second direction, a radial direction within one block core, and
   an angle between the first extension lines formed on any two block cores disposed adjacently in the first direction among the plurality of block cores forms a first angle.

9. The block laminated core of claim 8, wherein the second length is 3 to 8 times the first length.

10. The block laminated core of claim 9, wherein the welding part coupling the same two block cores among the plurality of block cores is formed as a plurality of welding parts, and a second angle, which is a smallest angle among angles formed by any two third extension lines among third extension lines that connect the plurality of welding parts coupling the same two block cores to the center of the block cores, is 10 to 180°.

11. The block laminated core of claim 7, wherein the electrical steel sheets are non-oriented electrical steel sheets including, in weight %,
    Si: 0.25 to 4.8%, Al: 0.05 to 2.0%, Mn: 0.15 to 1.0%, C: 0.0015 to 0.0040%, N: 0.0005 to 0.0030%, S: 0.0005 to 0.003%, Mo: 0.0050 to 0.015%, Ti: 0.0005 to 0.0020%, Nb: 0.0005 to 0.0040%, V: 0.0005 to 0.0040%, and a remainder of Fe and inevitable impurities.

[FIG. 1]

[FIG. 2]

[FIG. 3]

```
┌─────────────────────────┐
│   block core operation  │ ∼S10
└─────────────────────────┘
            │
            ▼
┌─────────────────────────┐
│ heat treatment operation│ ∼S20
└─────────────────────────┘
            │
            ▼
┌─────────────────────────┐
│   lamination operation  │ ∼S30
└─────────────────────────┘
            │
            ▼
┌─────────────────────────┐
│    welding operation    │ ∼S40
└─────────────────────────┘
```

[FIG. 4]

<u>10</u>

11

L1

S

DR1

⊗DR3

DR2

[FIG. 5]

[FIG. 6]

[FIG. 7]

[FIG. 8]

## INTERNATIONAL SEARCH REPORT

| International application No. |
| --- |
| **PCT/KR2024/014158** |

| A. | CLASSIFICATION OF SUBJECT MATTER |
| --- | --- |
| | **H02K 15/02**(2006.01)i; **H02K 15/12**(2006.01)i; **H01F 41/02**(2006.01)i; **H01F 3/02**(2006.01)i |

According to International Patent Classification (IPC) or to both national classification and IPC

| B. | FIELDS SEARCHED |
| --- | --- |

Minimum documentation searched (classification system followed by classification symbols)

H02K 15/02(2006.01); B21D 28/14(2006.01); H02K 1/18(2006.01); H02K 15/06(2006.01); H02K 21/44(2006.01); H02K 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 모터 코어(motor core), 적층(laminating), 용접(welding), 인터락킹 (interlocking), 길이(length)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2012-0039543 A (MITSUI HIGH-TEC, INC.) 25 April 2012 (2012-04-25) See paragraphs [0002], [0022]-[0023] and [0027]; claim 1; and figures 1-2. | 1-11 |
| A | KR 10-2023-0112230 A (DAEYOUNG ELECTRIC CO., LTD.) 27 July 2023 (2023-07-27) See paragraphs [0037]-[0053]; and figures 1-3. | 1-11 |
| A | KR 10-2016-0120076 A (JAHWA ELECTRONICS CO., LTD.) 17 October 2016 (2016-10-17) See paragraphs [0027]-[0063]; and figures 1-3. | 1-11 |
| A | US 2010-0019613 A1 (SABAN, Daniel M. et al.) 28 January 2010 (2010-01-28) See paragraphs [0003]-[0009]. | 1-11 |
| A | JP 2017-017855 A (MITSUI HIGH TEC., INC.) 19 January 2017 (2017-01-19) See paragraphs [0016]-[0023]; and figures 1-4. | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 December 2024** | **16 December 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/014158** |

| Patent document cited in search report | | | Publication date (day/month/year) | Patent family member(s) | | | Publication date (day/month/year) |
| --- | --- | --- | --- | --- | --- | --- | --- |
| KR | 10-2012-0039543 | A | 25 April 2012 | CN | 102804561 | A | 28 November 2012 |
| | | | | CN | 102804561 | B | 05 November 2014 |
| | | | | EP | 2448094 | A1 | 02 May 2012 |
| | | | | EP | 2448094 | A4 | 28 June 2017 |
| | | | | EP | 2448094 | B1 | 15 July 2020 |
| | | | | JP | 2011-010389 | A | 13 January 2011 |
| | | | | JP | 5581013 | B2 | 27 August 2014 |
| | | | | KR | 10-1660074 | B1 | 30 September 2016 |
| | | | | US | 2012-0091846 | A1 | 19 April 2012 |
| | | | | US | 8922084 | B2 | 30 December 2014 |
| | | | | WO | 2010-150592 | A1 | 29 December 2010 |
| KR | 10-2023-0112230 | A | 27 July 2023 | KR | 10-2691823 | B1 | 05 August 2024 |
| | | | | KR | 10-2691824 | B1 | 05 August 2024 |
| | | | | KR | 10-2691827 | B1 | 05 August 2024 |
| | | | | WO | 2023-140507 | A1 | 27 July 2023 |
| KR | 10-2016-0120076 | A | 17 October 2016 | KR | 10-1683638 | B1 | 08 December 2016 |
| US | 2010-0019613 | A1 | 28 January 2010 | CA | 2732271 | A1 | 04 February 2010 |
| | | | | CA | 2732271 | C | 21 June 2016 |
| | | | | CA | 2732275 | A1 | 04 February 2010 |
| | | | | CA | 2732275 | C | 21 June 2016 |
| | | | | CA | 2732998 | A1 | 04 February 2010 |
| | | | | CA | 2732998 | C | 21 March 2017 |
| | | | | CA | 2732999 | A1 | 04 February 2010 |
| | | | | CA | 2732999 | C | 21 June 2016 |
| | | | | CA | 2957201 | A1 | 04 February 2010 |
| | | | | CA | 2957201 | C | 02 January 2018 |
| | | | | CA | 2957203 | A1 | 04 February 2010 |
| | | | | CA | 2957203 | C | 17 July 2018 |
| | | | | EP | 2319157 | A2 | 11 May 2011 |
| | | | | EP | 2319157 | A4 | 05 June 2013 |
| | | | | EP | 2319158 | A2 | 11 May 2011 |
| | | | | EP | 2319158 | A4 | 26 December 2012 |
| | | | | EP | 2324556 | A2 | 25 May 2011 |
| | | | | EP | 2324556 | A4 | 19 December 2012 |
| | | | | EP | 2324556 | B1 | 21 April 2021 |
| | | | | EP | 2324557 | A2 | 25 May 2011 |
| | | | | EP | 2324557 | A4 | 12 December 2012 |
| | | | | EP | 2324557 | B1 | 10 November 2021 |
| | | | | EP | 2365612 | A2 | 14 September 2011 |
| | | | | EP | 2365612 | A3 | 05 June 2013 |
| | | | | EP | 2365612 | B1 | 22 September 2021 |
| | | | | EP | 2378628 | A2 | 19 October 2011 |
| | | | | EP | 2378628 | A3 | 26 December 2012 |
| | | | | EP | 2378636 | A2 | 19 October 2011 |
| | | | | EP | 2378636 | A3 | 12 December 2012 |
| | | | | EP | 2378637 | A2 | 19 October 2011 |
| | | | | EP | 2378637 | A3 | 12 December 2012 |
| | | | | EP | 2378638 | A2 | 19 October 2011 |
| | | | | EP | 2378638 | A3 | 12 December 2012 |
| | | | | EP | 2378638 | B1 | 22 September 2021 |

Form PCT/ISA/210 (patent family annex) (July 2022)

**INTERNATIONAL SEARCH REPORT**
Information on patent family members

International application No.

**PCT/KR2024/014158**

| Patent document cited in search report | Publication date (day/month/year) | Patent family member(s) | | | Publication date (day/month/year) |
|---|---|---|---|---|---|
| | | EP | 2378639 | A2 | 19 October 2011 |
| | | EP | 2378639 | A3 | 12 December 2012 |
| | | EP | 2378640 | A2 | 19 October 2011 |
| | | EP | 2378640 | A3 | 19 December 2012 |
| | | EP | 2378641 | A2 | 19 October 2011 |
| | | EP | 2378641 | A3 | 09 January 2013 |
| | | EP | 2378643 | A2 | 19 October 2011 |
| | | EP | 2378643 | A3 | 26 December 2012 |
| | | EP | 2378643 | B1 | 22 September 2021 |
| | | JP | 2011-529679 | A | 08 December 2011 |
| | | JP | 2011-529680 | A | 08 December 2011 |
| | | JP | 2011-529681 | A | 08 December 2011 |
| | | JP | 2011-529682 | A | 08 December 2011 |
| | | JP | 5497033 | B2 | 21 May 2014 |
| | | JP | 5819193 | B2 | 18 November 2015 |
| | | KR | 10-1633823 | B1 | 27 June 2016 |
| | | KR | 10-1666233 | B1 | 13 October 2016 |
| | | KR | 10-1697380 | B1 | 17 January 2017 |
| | | KR | 10-1771009 | B1 | 24 August 2017 |
| | | KR | 10-2011-0048537 | A | 11 May 2011 |
| | | KR | 10-2011-0049831 | A | 12 May 2011 |
| | | KR | 10-2011-0053440 | A | 23 May 2011 |
| | | KR | 10-2011-0055578 | A | 25 May 2011 |
| | | US | 2010-0019589 | A1 | 28 January 2010 |
| | | US | 2010-0019590 | A1 | 28 January 2010 |
| | | US | 2010-0019598 | A1 | 28 January 2010 |
| | | US | 2010-0019599 | A1 | 28 January 2010 |
| | | US | 2010-0019600 | A1 | 28 January 2010 |
| | | US | 2010-0019601 | A1 | 28 January 2010 |
| | | US | 2010-0019602 | A1 | 28 January 2010 |
| | | US | 2010-0019603 | A1 | 28 January 2010 |
| | | US | 2010-0019609 | A1 | 28 January 2010 |
| | | US | 2010-0019610 | A1 | 28 January 2010 |
| | | US | 2010-0019626 | A1 | 28 January 2010 |
| | | US | 2010-0171383 | A1 | 08 July 2010 |
| | | US | 8040007 | B2 | 18 October 2011 |
| | | US | 8179009 | B2 | 15 May 2012 |
| | | US | 8183734 | B2 | 22 May 2012 |
| | | US | 8237320 | B2 | 07 August 2012 |
| | | US | 8247938 | B2 | 21 August 2012 |
| | | US | 8253298 | B2 | 28 August 2012 |
| | | US | 8310123 | B2 | 13 November 2012 |
| | | US | 8334630 | B2 | 18 December 2012 |
| | | US | 8350432 | B2 | 08 January 2013 |
| | | US | 8415854 | B2 | 09 April 2013 |
| | | US | 8421297 | B2 | 16 April 2013 |
| | | WO | 2010-014640 | A2 | 04 February 2010 |
| | | WO | 2010-014640 | A3 | 14 May 2010 |
| | | WO | 2010-014642 | A2 | 04 February 2010 |
| | | WO | 2010-014642 | A3 | 22 April 2010 |

Form PCT/ISA/210 (patent family annex) (July 2022)

**INTERNATIONAL SEARCH REPORT**
**Information on patent family members**

International application No.

**PCT/KR2024/014158**

| Patent document cited in search report | | | Publication date (day/month/year) | Patent family member(s) | | | Publication date (day/month/year) |
|---|---|---|---|---|---|---|---|
| | | | | WO | 2010-014646 | A2 | 04 February 2010 |
| | | | | WO | 2010-014646 | A3 | 06 May 2010 |
| | | | | WO | 2010-014647 | A2 | 04 February 2010 |
| | | | | WO | 2010-014647 | A3 | 22 April 2010 |
| JP | 2017-017855 | A | 19 January 2017 | CA | 2933873 | A1 | 30 December 2016 |
| | | | | CA | 2933873 | C | 01 May 2018 |
| | | | | CN | 106329848 | A | 11 January 2017 |
| | | | | CN | 106329848 | B | 15 January 2019 |
| | | | | JP | 6501655 | B2 | 17 April 2019 |
| | | | | US | 10298102 | B2 | 21 May 2019 |
| | | | | US | 2017-0005551 | A1 | 05 January 2017 |

Form PCT/ISA/210 (patent family annex) (July 2022)

**REFERENCES CITED IN THE DESCRIPTION**

**Patent documents cited in the description**

- KR 102438474 B1
- KR 102448799 B1
- KR 100584116 B1

- KR 102382699 B1
- KR 100950339 B1